Europäisches Patentamt

European Patent Office

Office européen des brevets

(19)

(11) Veröffentlichungsnummer: **0 621 466 A1**

## (12) EUROPÄISCHE PATENTANMELDUNG

(21) Anmeldenummer: **94106042.8**

(22) Anmeldetag: **19.04.94**

(51) Int. Cl.$^5$: **G01F 23/26**

(30) Priorität: **20.04.93 DE 4312813**

(43) Veröffentlichungstag der Anmeldung:
**26.10.94 Patentblatt 94/43**

(84) Benannte Vertragsstaaten:
**AT BE CH DE DK ES FR GB IT LI NL**

(71) Anmelder: **TESTO GmbH & Co.**
**Kolumban-Kayser-Strasse 17**
**D-79853 Lenzkirch (DE)**

(72) Erfinder: **Demisch, Ullrich Dr. Dipl.-Phys.**
**Hildastrasse 42**
**79102 Freiburg (DE)**
Erfinder: **Kuipers, Ulrich Prof. Dr.**
**Hatzenbergstrasse 32**
**57462 Olpe (DE)**

(74) Vertreter: **Patentanwälte Westphal, Buchner,**
**Mussgnug Neunert, Göhring**
**Waldstrasse 33**
**D-78048 Villingen-Schwenningen (DE)**

(54) **Anordnung zur kapazitiven Füllstandsmessung und deren Verwendung.**

(57) Die Anordnung zur kapazitiven Füllstandsmessung von elektrisch leitenden Füllgütern weist eine Meßeinrichtung auf, die über eine Zuführungsleitung eine zwischen einer Meßelektrode und einer durch das Füllgut gebildeten Gegenelektrode eine Kapazität als Maß für den zu ermittelnden Füllstand bestimmt. Die Zuführungsleitung und die Meßelektrode sind dabei jeweils aus einem Koaxialkabel gebildet.

FIG.3

EP 0 621 466 A1

Die Erfindung betrifft eine Anordnung zur kapazitiven Füllstandsmessung von elektrisch leitenden Füllgütern und die Verwendung einer solchen Anordnung.

Die kapazitive Füllstandsmessung ist eines der industriell am weit verbreitesten Verfahren zur Füllstandsmessung. Mit der kapazitiven Füllstandsmessung sind kontinuierliche Messungen und Grenzstanderfassrnngen möglich. Bei kapazitiven Füllstandsmeßverfahren wird prinzipiell zwischen nicht leitenden Füllgütern und leitenden Füllgütern unterschieden.

Bei elektrisch nicht leitenden Füllgütern, wie z.B. Sand, Mehl oder dergleichen, dient das Füllgut selbst als Dielektrikum der kapazitiven Meßanordnung. Das Füllgut wird dabei zwischen die Elektroden eines Meßkondensators gebracht und bestimmt damit dessen Kapazität. Die Elektroden des Meßkondensators sind in der Regel ein in einen Behälter montierter Stab und die Behälterwand. Anordnungen zur kapazitiven Messung von Füllständen sind beispielsweise aus der DE 41 18 170 A1, DE 28 24 144 C2, DE 38 04 674 C2, DE 30 50 189 C2, DE 30 46 915 C2, DE 16 48 163 C2 und der EP 0 271 856 A2 sowie der DE U 8108727.6 bekannt.

Bei diesen bekannten Anordnungen wird die Kapazität des Meßkondensators durch den Abstand der Elektrodenflächen, die Größe der Elektrodenflächen sowie das zwischen den Elektroden angeordnete Dielektrikum in Form des Füllgutes bestimmt. Das Dielektrikum ist dabei die veränderliche Größe und liefert ein Maß für den Füllstand. Mit der kapazitiven Füllstandsmessung lassen sich sowohl Flüssigkeiten, Schüttgüter als auch Gase messen.

Bei diesen bekannten Meßverfahren zur kapazitiven Füllstandsmessung ändert sich in Abhängigkeit des zu messenden Füllstandes das Gesamtdielektrikum im Meßkondensator. Voraussetzung für ein einwandfreies Funktionieren dieses bekannten Meßverfahrens ist jedoch, daß die relative Dielektrizitätskonstante des zu messenden Füllgutes deutlich ungleich 1 ist. Nachteilig bei diesen Verfahren ist darüber hinaus, daß sich eine Änderung der Dielektrizitätskonstanten des Füllgutes direkt auf das Meßergebnis auswirkt. Falls die relative Dielektrizitätskonstante des Füllgutes nicht als konstant angesehen werden kann, muß für den Erhalt eines korrekten Meßergebnisses oft ein mit dem zu messenden Füllgut gefüllter Referenzkondensator vorgesehen werden. Darüber hinaus ist es oft nicht möglich die Dielektrizitätskonstante des Füllgutes vorher exakt zu kennen.

Mit diesen bekannten Vorrichtungen ist es allerdings nicht möglich, eine kapazitive Füllstandsmessung von leitenden Füllgütern, wie z.B. Wasser, Grundwasser oder dergleichen, durchzuführen, da diese Füllgüter zwischen den Meßelektroden des Meßkondensators einen Kurzschluß verursachen würden.

Diese bekannten Anordnungen setzen jedoch einen Nichtleiter als Füllgut voraus. Ein kapazitives Füllstandsmeßverfahren, bei dem das Füllgut elektrisch leitet, ist beispielsweise in dem Buch "Technische Füllstandsmessung und Grenzstandskontrolle" von K.W. Bonfig, erschienen im Expert-Verlag, 1990 in der Reihe Kontakt & Studium, Band 305 auf den Seiten 105 ff beschrieben. Unter Punkt 6.1.3 ist dort ausgeführt, daß eine Meßeinrichtung eine zu messende Kapazität zwischen einer Meßelektrode und einer durch das Füllgut gebildeten Gegenelektrode als Maß für den zu ermittelnden Füllstand bestimmt. In die Meßeinrichtung wird dabei durch Isolation der Meßelektrode (üblicherweise eines Meßstabes) ein zusätzliches Dielektrikum angebracht und damit ein Kurzschluß vermieden. Die Kapazitätsgröße wird dann nicht mehr vom Dielektrikum, sondern von der sich quasi verschiebenden Gegenelektrode, das das Füllgut bildet, zur Meßelektrode bestimmt.

Bei dieser bekannten kapazitiven Füllstandsmessung von leitenden Füllgütern dient das Füllgut im überfluteten Teil des Meßkondensators als eine Elektrode der kapazitiven Meßanordnung. Das Dielektrikum wird hierbei von einer die zweite Elektrode umgebenden Isolierschicht gebildet. Eine Füllstandsänderung ändert somit die Geometrie des Meßkondensators.

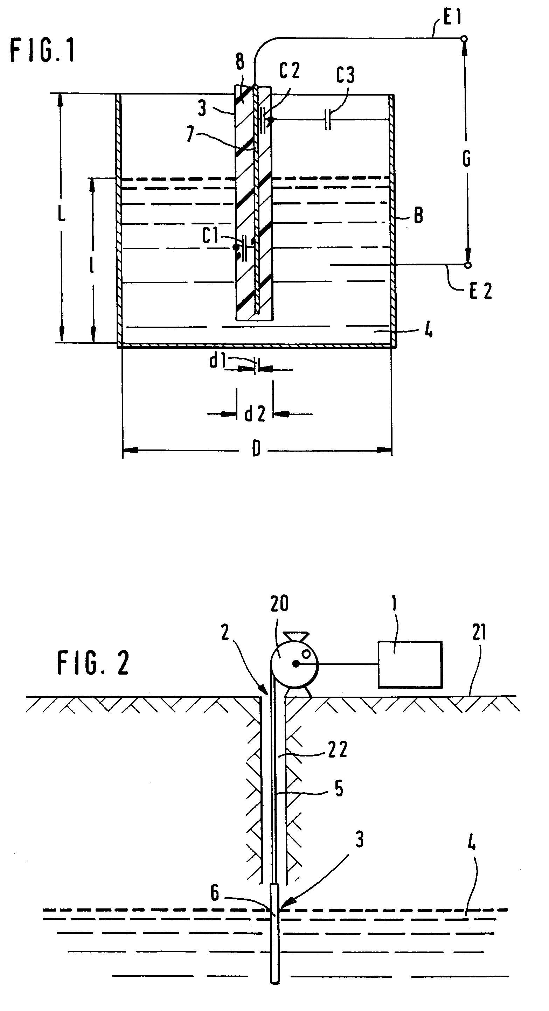

Dieses bekannte Meßprinzip wird anhand von Figur 1 näher ausgeführt. In Figur 1 ist in einen Behälter B ein Füllgut 4 gefüllt. Es wird angenommen, daß das Füllgut 4 Wasser ist. In diesen Behälter B ist eine Meßelektrode senkrecht eingeführt. Die Meßelektrode besteht aus einem im Querschnitt runden Innenleiter 7, der von einer den Innenleiter 7 umgebenden ersten Isolierschicht 8 koaxial umgeben ist. Der Innenleiter 7 weist eine Dicke d1 auf, während der Durchmesser der ersten Isolierschicht 8 mit d2 bezeichnet ist. Der Behälter sei rotationssymmetrisch und weist einen Durchmesser D auf. Die zu messende Kapazität C, die ein Maß für den zu ermittelnden Füllstand des Füllgutes 4 darstellt, wird in der Darstellung von Figur 1 an zwei Meßelektroden E1, E2 abgegriffen. Die erste Meßelektrode E1 ist dafür mit dem Innenleiter 7 und die zweite Meßelektrode E2 mit dem leitenden Füllgut 4 elektrisch in Verbindung.

Die zu messende Kapazität C setzt sich insgesamt aus drei Kapazitäten C1, C2 und C3 zusammen. C1 bezeichnet die Kapazität zwischen dem Innenleiter 7 und dem Füllgut 4 im überfluteten Teil des Behälters B, während C2 die Kapazität in der ersten Isolierschicht 8 im nicht überfluteten Teil des Behälters B und C3 die Kapazität zwischen der ersten Isolierschicht 8 und der Wandung des Behälters B im nicht überfluteten Teil bezeichnet. Die Kapazität C3 nimmt mit größer werdendem Außendurchmesser D des Behälters B nach der Funktion 1/ln(D/d2) schnell ab. Bei Berücksichtigung dieser Kapazität C3 errechnet sich unter der Voraussetzung eines Aufbaus der in Figur 1 gezeigten koaxialen Anordnung eine Kapazität C des Meßkondensators zu

$$C = 2 \cdot \pi \cdot \epsilon_0 \cdot \epsilon_r \cdot (l/\ln(d2/d1) + (L-l)/(\ln d2/d1 + \epsilon_r \cdot \ln D/d2),$$

wobei $C$ = Meßkapazität, $\epsilon_0$ = elektrische Feldkonstante, $\epsilon_r$ = Dielektrizitätskonstante der ersten Isolierschicht 8, $L$ = Höhe des Behälters B und $l$ = aktuelle Füllhöhe des Füllgutes 4.

Die Teilkapazität, die im ungefüllten Raum des Behälters B zwischen dem Innenleiter 7 und der Wandung des Behälters B entsteht, also die Kapazität der Serienschaltung C2 und C3, ist meist so gering, daß sie vernachlässigt werden kann. Für den Fall einer solchen vernachlässigbaren Kapazität im nicht gefüllten Teil des Behälters B oder auch bei einer weit entfernten außen liegenden und elektrisch leitenden Begrenzung des Füllvolumens (z.B. bei der Pegelstandsmessung von Grundwasser) errechnet sich die Gesamtkapazität C in Abhängigkeit vom Füllstand aus der Formel

$$C = C_m \cdot l/L$$

wobei $C_m$ die Kapazität des Meßkondensators bei maximaler Füllstandshöhe $L$ bezeichnet.

Bei einer koaxialen Meßanordnung, wie diese in Figur 1 dargestellt ist, errechnet sich unter Vernachlässigung der Kapazität im nicht gefüllten oberen Teil des Behälters B die Kapazität $C_m$ folglich aus

$$C_m = 2 \cdot \pi \cdot \epsilon_0 \cdot \epsilon_r \cdot L/\ln(d2/d1).$$

Vorteilhaft an dieser Meßmethode ist der lineare Zusammenhang zwischen der gemessenen Kapazitätsänderung und dem Füllstand. Damit ist eine Kalibrierung der Meßanordnung relativ einfach über zwei Meßpunkte möglich. Darüber hinaus haben Änderungen der Dielektrizitätskonstanten des Füllgutes bei dieser Meßanordnung mit leitenden Füllgütern keine Auswirkungen auf das Meßergebnis. Da die Dielektrizitätskonstante der Isolierschicht 8 als bekannt und konstant vorausgesetzt werden kann, ist bei diesen Meßverfahren daher keine Referenzkapazität notwendig.

Es sind mittlerweile unterschiedlichste Bauformen solcher kapazitiven Füllstandsmeßanordnungen bekannt geworden, wie dies beispielsweise aus dem eingangs erwähnten Buch unter Punkt 6.1.5 auf den Seiten 106 bis 108 zu sehen ist. So sind dort Anordnungen beschrieben, bei denen die zugehörige Meßelektronik entweder in Form eines Elektronik-Einsatzes in einem Gehäuse direkt über der Meßelektrode eingebaut oder über ein abgeschirmtes Kabel an die Meßelektronik angeschlossen ist. Die Meßelektrode ist dabei für Messungen leitender Füllgüter voll isoliert. Für größere Elektrodenlängen (ab ca. 4m) ist es auch bekannt, statt einer starren Meßelektrode ein Meßseil zu verwenden, das durch Umspritzen isoliert ist.

Mit diesen bekannten Meßanordnungen ist beispielsweise eine Pegelstandsmessung von Grundwasser nicht in zufriedenstellender Weise möglich. Bei der Pegelstandsmessung von Grundwasser ist nämlich der Pegelbereich, in dem gemessen werden soll, relativ gering im Vergleich zu der Tiefe, in der gemessen wird. Zu einer solchen Messung bietet es sich zwar an, die Meßelektronik samt Meßelektrode über eine Seilvorrichtung mit abzusenken und lediglich die Meßinformation an die Oberfläche zu übertragen. Dies ist jedoch umständlich und mit erhöhtem Aufwand verbunden.

Darüber hinaus ist mit den bisher bekannten Anordnungen, egal ob Seilelektroden oder Stabelektroden verwendet werden, die gesamte Länge der Stabelektrode oder der Seilelektrode zur Kapazitätsmessung heranzuziehen. Dies erfordert eine hohe reproduzierbare Auflösung der Meßanordnung. Als problematisch hat sich auch herausgestellt, daß bei den bisher bekannten Anordnungen zur kapazitiven Pegelstands- oder Füllstandsmessung die Meßelektroden jeweils speziell für jede einzelne Meßstelle konfektioniert sein müssen. Ein weiterer Nachteil besteht darin, daß es bei den bisher verwendeten kapazitiven Meßanordnungen ohne weitere Hilfsmittel nicht möglich ist, beim erstmaligen Eintauchen der Meßelektrode in das Füllgut festzustellen, ob die Spitze der Meßelektrode in das Füllgut eingetaucht ist oder nicht. Dies bedeutet, daß eine Nullpunktkalibrierung der Meßeinrichtung aufwendig ist. Der Erfindung liegt die Aufgabe zugrunde, die genannten Nachteile zu vermeiden und eine besonders einfache Anordnung zur kapazitiven Füllstandsmessung von elektrisch leitenden Füllgütern anzugeben, die einen minimalen technischen Aufwand zu ihrer Herstellung erfordert und darüber hinaus in weiten Bereichen eingesetzt werden kann. Darüber hinaus soll eine Verwendung der Anordnung angegeben werden.

Diese Aufgabe wird für die Anordnung dadurch gelöst, daß die Zuführungsleitung zur Meßelektrode und die Meßelektrode jeweils aus einem Koaxialkabel gebildet sind.

Weiterbildungen dieser Anordnung sind Gegenstand der Unteransprüche.

Eine Verwendung der erfindungsgemäßen Anordnung ist Gegenstand des Anspruchs 13.

Die Erfindung beruht also im wesentlichen darauf, daß die Anordnung zur kapazitiven Füllstands- bzw. Pegelstands-Messung sowohl für die Zuführungsleitung als auch für die Meßelektrode selbst ein Koaxialkabel vorsieht. Im einfachsten Fall bestehen die Zuführungsleitung zur Meßelektrode und die Meßelektrode selbst jeweils aus unterschiedlichen Abschnitten eines einzigen Koaxialkabels.

Eine Weiterbildung der Erfindung sieht vor, daß das die Zuführungsleitung bildende Koaxialkabel ein Innenleiter, eine diesen Innenleiter umgebende erste Isolierschicht, einen die erste Isolierschicht umgebenden Außenleiter und eine den Außenleiter umgebende zweite Isolierschicht aufweist. Das die Meßelektrode bildende Koaxialkabel besteht aus einem Innenleiter und einer diesen Innenleiter umgebenden ersten Isolierschicht sowie einen die erste Isolierschicht umgebenden Außenleiter. Eine derartige Anordnung hat den Vorteil, daß die Meßelektrode und die Zuführungsleitung aus ein und demselben Koaxialkabel gebildet sein können, wobei im Bereich der Meßelektrode lediglich die den Außenleiter umgebende Isolierschicht entfernt werden muß.

Durch die Verwendung eines einzigen oder zwei hintereinander geschalteter flexibel ausgebildeter Koaxialkabel ist es in einfacher Weise möglich, eine Wickelvorrichtung vorzusehen, auf die das Koaxialkabel dank seiner flexiblen Gestalt, in einfacher Weise aufgewickelt werden kann und damit ein platzsparender Aufbau der erfindungsgemäßen Anordnung gewährleistet ist. Damit lassen sich Füllstandsmessungen bzw. Pegelstandmessungen ausführen, die ein Messen in einer großen Tiefe zur Meßanordnung erfordern, wie dies beispielsweise bei der Pegelstandsmessung von Grundwasser oft notwendig ist.

In einer Weiterbildung der Erfindung ist es vorgesehen, daß mindestens im Bereich der Meßelektrode die erste Isolierschicht, d.h. die den Innenleiter umgebenen Isolierschicht des Koaxialkabels, einen im Vergleich zum Durchmesser des Innenleiters möglichst kleinen Durchmesser aufweist. Hierdurch kann die Meßgenauigkeit der Anordnung erhöht werden.

Eine Weiterbildung der Erfindung sieht vor, daß das Koaxialkabel der Zuführungsleitung über eine elektrische Kreuzung mit dem Koaxialkabel der Meßelektrode verbunden ist. Hierfür ist ein Innenleiter des Koaxialkabels der Zuführungsleitung mit einem Außenleiter des Koaxialkabels der Meßelektrode und ein Innenleiter des Koaxialkabels der Meßelektrode mit einem Außenleiter des Koaxialkabels der Zuführungsleitung verbunden. Durch eine derartige Anordnung besitzt die Meßelektrode einen im Vergleich zur äußeren Isolierschicht des Koaxialkabels großen Durchmesser, wodurch eine genauere Messung der Kapazität und damit eine genauere Füllstandsbestimmung ermöglicht wird. Durch die elektrische Kreuzung zwischen dem Koaxialkabel der Zuführungsleitung und dem Koaxialkabel der Meßelektrode kann der Anteil der im nicht mit Füllgut bedeckten Bereich der Meßelektrode liegenden Kapazität weitgehend vernachlässigt werden. Durch die elektrische Kreuzung wird erreicht, daß die Dicke der äußeren Isolierschicht des Koaxialkabels im Vergleich zum Leitungsdurchmesser des Außenleiters dünn ist und damit der in Zusammenhang mit Figur 1 gezeigte Kondensator C1 viel größer als die Serienschaltung der Kondensatoren C2 und C3 ist.

Im allgemeinen gestaltet man also die Kapazität C1 bzw. C2 in der inneren Isolierschicht vorteilhaft sehr viel größer als die Kapazität des Kondensators C3. Dazu ist das Verhältnis $\ln(d2/d1)$ möglichst klein zu machen. Dies bedeutet zugleich, daß die Dicke der Isolierschicht zwischen dem Leiter der Meßelektrode und dem leitenden Füllgut im Vergleich zum Leitungsdurchmesser der Meßelektrode möglichst dünn ausgebildet wird. Der Leitungsdurchmesser dagegen soll möglichst groß sein. Eine einfache Realisierung dieser Forderungen wird erfindungsgemäß dadurch erreicht, daß in der Meßelektrode der Innenleiter an den Außenleiter des Koaxialkabels der Zuführungsleitung und der Außenleiter der Meßelektrode an den Innenleiter der Zuführungsleitung angeschlossen wird. Es können jedoch auch beispielsweise zwei in den Abmessungen verschiedene Koaxialkabel miteinander verbunden werden, sofern die oben angegebenen Bedingungen hinsichtlich der Abmessungen eingehalten werden.

In einer Weiterbildung dieser erfindungsgemäßen Anordnung ist es vorgesehen, die elektrische Kreuzung innerhalb einer mechanischen und/oder elektrischen Schutzeinrichtung anzuordnen. Eine solche Schutzeinrichtung kann beispielsweise eine metallische Kapsel sein, die eine Verbindungsstelle zwischen dem Koaxialkabel der Zuführungsleitung und dem Koaxialkabel der Meßelektrode umschließt. Vorzugsweise wird eine solche metallisch ausgeführte Schutzeinrichtung mit dem Außenleiter des Koaxialkabels der Zuführungsleitung verbunden und von einer Isolierschicht umgeben.

Eine andere Weiterbildung der Erfindung sieht vor, daß der Innenleiter der Meßelektrode zusätzlich als konduktiver Meßaufnehmer, insbesondere als induktiver Grenzstandsensor, ausgebildet ist. Hierfür wird ein distales Endes des Koaxialkabels im Bereich der Meßelektrode so ausgestaltet, daß der Innenleiter des Koaxialkabels der Meßelektrode mit dem Füllgut elektrisch in Kontakt treten kann. Vorzugsweise wird am distalen Ende des Innenleiters ein elektrischer Widerstand angeordnet, über den der Füllstand den Innenleiter der Meßelektrode kontaktieren kann. Ein derartiger elektrischer Widerstand verhindert eine zu große Belastung eines Verstärkers in der Meßeinrichtung für eine Schirmung bei der Kapazitätsmessung. Mit einem derartigen konduktiven Meßaufnehmer kann somit bei der Kalibrierung bzw. Festlegung eines Nullpegels festgestellt werden, wann die Meßelektrode in das Füllgut eintaucht. Mit einer Zähleinrichtung an einer Wickeleinrichtung zum Aufwickeln des Koaxialkabels kann dann beispielsweise die Länge des abgewickelten Kabels bestimmt werden. Über eine Hülse am unteren Ende der Meßelektrode wird vorzugsweise sowohl der Außenleiter des Koaxialkabels der Meßelektrode vom Füllgut, beispielsweise Wasser, isoliert und der Innenleiter über den gegebenenfalls vorhandenen Widerstand mit dem Wasser kontaktiert.

Zur Messung der Kapazität gegen Erde wird zweckmäßigerweise von der Meßeinrichtung ein Meßsignal gegen Masse und damit des Füllstandes bzw. Pegelstandes auf den Innenleiter des Koaxialkabels der Zuführungsleitung gelegt. Auf den Außenleiter wird dann ein identisches aber elektrisch unabhängiges Signal gelegt. Das gesamte Dielektrikum des Koaxialkabels im Bereich der Zuführungsleitung bildet damit ein einziges Äquipotentialvolumen, d.h. die elektrische Feldstärke ist hier Null. Ein derartiges Beschalten des Innenleiters und Außenleiters der Zuführungsleitung hat somit den Vorteil, daß dieser Teil des Koaxialkabels keinerlei Einfluß auf das Meßergebnis hat.

Eine andere Möglichkeit den Einfluß des Zuführungskabels auf das Meßergebnis auszuschließen, besteht darin, auf den Außenleiter des die Zuführungsleitung bildenden Koaxialkabels den Masseanschluß der Meßeinrichtung oder ein anderes konstantes Gleichspannungspotential, d.h. eine gegenüber Masse konstante Gleichspannung, zu legen. Bei dieser Ausführungsform ist es von Vorteil, die Anordnung so auszubilden, daß Kapazitäten gegen Masse nicht mitgemessen werden.

Die Verwendung einer Aufwickelvorrichtung bietet darüber hinaus des Vorteil, daß beim Einsatz der erfindungsgemäßen Anordnung lediglich das die Meßelektrode bildende Koaxialkabel abgewickkelt werden muß, da das Koaxialkabel der Zuführungsleitung keinerlei Einfluß auf das Meßergebnis hat. Soll dagegen ein Füllstand oder Pegelstand in einer großen Bodentiefe ausgehend von einer Bodenoberfläche gemessen werden, so ist mit dem erfindungsgemäßen Koaxialkabel und der Aufwickelvorrichtung eine einfache Möglichkeit gegeben, die Meßelektrode in Form des Koaxialkabels samt Zuführungsleitung in große Tiefen herablassen zu können ohne die Meßeinrichtung mitabsenken zu müssen.

Eine solche Füllstand- bzw. Pegelstandmessung in großen Tiefen ist beispielsweise bei der Bestimmung eines Grundwasserpegels notwendig, bei der die erfindungsgemäße Anordnung vorteilhaft eingesetzt werden kann. Bei der erfindungsgemäßen Pegelstandsmessung von Grundwasser wird dabei die Kapazität der Meßelektrode gegenüber Erde gemessen. Vorzugsweise wird ausschließlich die Kapazität und nicht auch ein serieller ohmscher Widerstand der Meßelektrode gemessen, da dieser serielle ohmsche Widerstand der Meßelektrode für die Messung eines Pegelstandes irrelevant ist. Ein zweiter Anschluß der Meßeinrichtung wird zur Kapazitätsermittlung beispielsweise während eines Meßvorganges in einem Brunnen an Erde, z.B. an einen Erdnagel oder an ein elektrisch leitendes Brunnenrohr, angeschlossen. Damit bildet die auf Erde liegende Oberfläche des Grundwassers die Gegenelektrode zur Meßelektrode. Zur Ermittlung der Kapazität der erfindungsgemäßen Anordnung wird beispielsweise ein kapazitiver Strom bei konstanter Frequenz und Spannung gemessen, die der Meßelektrode und der mit dem Füllgut in Verbindung stehenden Elektrode zugeführt wird. Als Meßeinrichtung wird üblicherweise ein Sinusgenerator mit einem Ausgangsübertrager vorgesehen. Die Meßfrequenz liegt vorzugsweise etwa zwischen 20 KHz und 2 MHz.

Es ist zudem möglich, daß ein Umladekondensator in der Meßeinrichtung vorgesehen ist. Die vom Pegel des zu meßenden Pegelstandes abhängige Ladung zwischen der erfindungsgemäßen Meßelektrode und der Gegenelektrode kann dann auf den Umladekondensator umgeladen w erden, wobei dann eine am Umladekondensator meßbare Spannung die Information für den zu ermittelnden Pegelstand bildet.

Zur Ermittlung eines Grenzstandes, d.h. ob die Meßelektrode bereits in das Füllgut eingetaucht ist, kann beispielsweise ein Vorhandensein eines Wirkanteils des Meßstromes in einem Leiter des die Zuführungsleitung bildenden Koaxialkabels erfaßt werden. Bei der erfindungsgemäßen Anordnung mit elektrischer Kreuzung wird das Vorhandensein dieses Wirkanteiles im Außenleiter und bei der Lösung ohne dielektrische Kreuzung im Innenleiter des Koaxialkabels der Zuführungsleitung erfaßt. Hierfür wird vorzugsweise zwischen den einzelnen Meßintervallen oder vor der eigentlichen Kapazitätsmessung eine auf Erde bezogene Gleichspannung auf den Außen- bzw. Innenleiter des Koaxialkabels der Zuführungsleitung geschaltet. Fließt ein Strom, so ist das distale Ende der Meßelektrode in das Füllgut eingetaucht. Voraussetzung hierfür ist selbstverständlich, daß die Meßelektrode an ihrem distalen Ende mit dem Füllgut elektrisch in Kontakt treten kann.

Vorteilhaft bei der erfindungsgemäßen Anordnung ist, daß die Kapazität für maximale Füllhöhe, d.h. für maximalen Pegel, unabhängig von den Einbaubedingungen der Anordnung ist. Diese kann daher beispielsweise jeweils einmal für jeden Typ der erfindungsgemäßen Anordnung im Labor bestimmt werden. Dies stellt einen ersten Kalibrierungspunkt für die erfindungsgemäße Anordnung dar. Ein zweiter Kalibrierungspunkt wird mit Hilfe der oben beschriebenen Grenzstandbestimmung, beispielsweise mit Hilfe des erfindungsgemäßen konduktiven Meßaufnehmers, bei $l = 0$ an der Meßstelle vor Ort bestimmt. Hierzu wird beim Abrollen des Koaxialkabels von einer Abwickeleinrichtung, z.B. einer Kabeltrommel, in dem Augenblick, in dem der konduktive Meßaufnehmer das Berühren der Füllgutoberfläche anzeigt, die Kapazität der Meßanordnung gemessen. Aus diesen beiden Kapazitätswerten für $l = L$ und $l = 0$ kann dann von der Meßeinrichtung die Meßgerätekennlinie errechnet werden.

Die erfindungsgemäße Anordnung zur kapazitiven Füllstandsmessung von elektrisch leitenden Füllgütern wird im folgenden anhand von weiteren fünf Figuren beispielhaft näher erläutert. Es zeigen:

Figur 1     eine bekannte Prinzipanordnung zur kapazitiven Füllstandsmessung von elektrisch leitenden Füllgütern,

Figur 2     ein erstes Beispiel einer erfindungsgemäßen Anordnung zur Pegelstandmessung von Grundwasser,

Figur 3     einen Ausschnitt eines ersten Ausführungsbeispieles eines die Zuführungsleitung und die Meßelektrode bildenden Koaxialkabels,

Figur 4     einen Ausschnitt eines zweiten Ausführungsbeispieles eines die Zuführungsleitung und die Meßelektrode bildenden Koaxialkabels mit einer elektrischen Kreuzung am Übergang von der Zuführungsleitung zur Meßelektrode, und

Figur 5     einen Ausschnitt eines distalen Endes des Koaxialkabels der Meßelektrode mit konduktiven Meßaufnehmer.

In Figur 2 ist eine erfindungsgemäße Anordnung zur kapazitiven Pegelmessung von Grundwasser dargestellt. Die Anordnung weist eine Meßeinrichtung 1 auf, die über eine Zuführungsleitung 2 an eine Meßelektrode 3 angeschlossen ist. Durch die Meßeinrichtung 1 kann eine zu messende Kapazität zwischen der Meßelektrode 3 und einer durch das Füllgut 4, in diesem Fall das Grundwasser, gebildeten Gegenelektrode als Maß für den zu ermittelnden Pegelstand bestimmt werden. Die Zuführungsleitung 2 und die Meßelektrode 3 sind jeweils aus einem Koaxialkabel 5, 6 gebildet. Das Koaxialkabel 5, 6 kann dabei über eine Wickelvorrichtung, beispielsweise eine Kabeltrommel 20, auf- bzw. abgewickelt werden. In der Darstellung von Figur 2 befindet sich die Meßeinrichtung 1 und die Kabeltrommel 20 auf der Oberfläche eines Bodengrundes 21 angeordnet. Im Boden befindet sich zur Grundwasseroberfläche senkrecht eine Öffnung 22, in die die Zuführungsleitung 2 samt Meßelektrode 3 in Form des Koaxialkabels 5, 6 senkrecht herabgelassen werden kann, und zwar so weit, daß ein zuverlässiges Messen des Pegelstandes des Grundwassers 4 möglich ist.

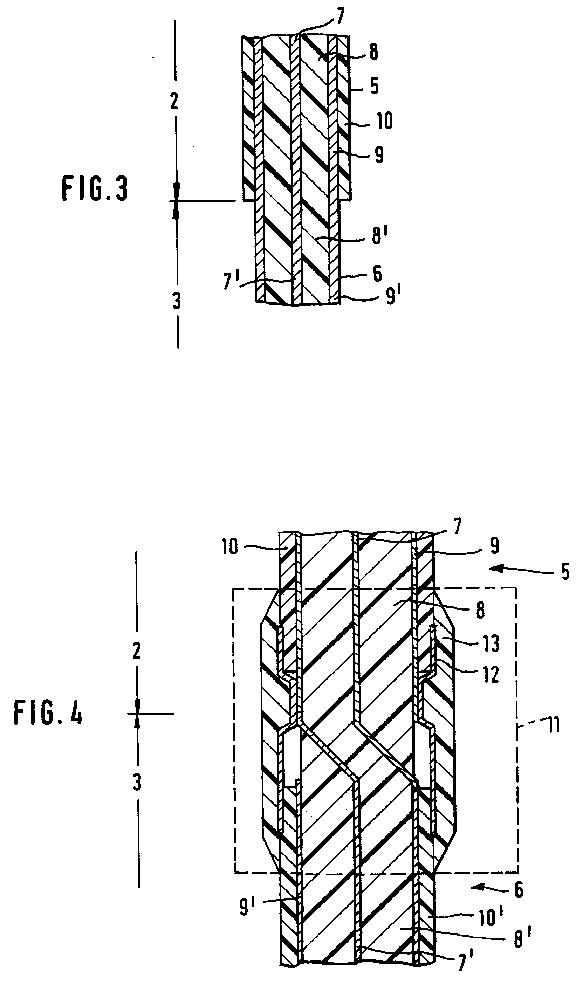

In Figur 3 ist ein Ausschnitt eines ersten Ausführungsbeispieles eines erfindungsgemäßen Koaxialkabels im Bereich der Schnittstelle der Zuführungsleitung 2 zur Meßelektrode 3 dargestellt. Das die Zuführungsleitung 2 bildende Koaxialkabel 5 weist einen Innenleiter 7, eine diesen Innenleiter 7 umgebende erste Isolierschicht 8, einen die erste Isolierschicht 8 umgebenen Außenleiter 9 und eine den Außenleiter 9 umgebende zweite Isolierschicht 10 auf. Das die Meßelektrode 3 bildende Koaxialkabel 6 weist einen Innenleiter 7', eine diesen Innenleiter 7' umgebende erste Isolierschicht 8' sowie einen die erste Isolierschicht 8' umgebenden Außenleiter 9' auf.

In der Darstellung von Figur 3 ist der Innenleiter 7 des Koaxialkabels 5 der Zuführungsleitung 2 mit dem Innenleiter 7' des Koaxialkabels 6 der Meßelektrode 3 elektrisch in Verbindung und der Außenleiter 9 des Koaxialkabels 5 der Zuführungsleitung an den Außenleiter 9' des Koaxialkabels 6 der Meßelektrode 3 angeschlossen.

Die erste Isolierschicht 8' des Koaxialkabels 6 der Meßelektrode hat vorzugsweise eine im Vergleich zum Durchmesser des Innenleiters 7' des Koaxialkabels 6 der Meßelektrode 3 kleine Dicke. Obwohl das die Zuführungsleitung 2 bildende Koaxialkabel 5 und das die Meßelektrode 3 bildende Koaxialkabel 6 prinzipiell zwei unterschiedliche Koaxialkabel sein können, die am Übergang von Zuführungsleitung und Meßelektrode miteinander in geeigneter Weise elektrisch verbunden werden, bietet es sich an, ein einziges Koaxialkabel für die Zuführungsleitung 2 und die Meßelektrode 3 vorzusehen. Wie in der Darstellung von Figur 3a gezeigt, muß hierbei lediglich die äußere Isolierschicht im Bereich der Meßelektrode 3 vom Koaxialkabel 6 entfernt werden. Eine derartige Ausführung des Koaxialkabels 6 erlaubt es, daß das elektrisch leitende Füllgut mit dem Außenleiter 9' mindestens teilweise im Bereich der Meßelektrode in Kontakt treten kann und damit die eingangs erwähnte kapazitive Füllstandsmessung ermöglicht wird.

Figur 4 zeigt einen Ausschnitt eines zweiten Ausführungsbeispieles einer erfindungsgemäßen Anordnung. Gleiche Bezugszeichen bezeichnen wieder gleiche Teile. Das Koaxialkabel 5 der Zuführungsleitung 2 ist jetzt über eine elektrische Kreuzung 11 mit dem Koaxialkabel 6 der Meßelektrode 3 verbunden, indem der Innenleiter 7 des Koaxialkabels 5 der Zuführungsleitung 2 mit dem Außenleiter 9' des Koaxialkabels 6 der Meßelektrode 3 und der Innenleiter 7' des Koaxialkabels 6 der Meßelektrode 3 mit dem Außenleiter 9 des Koaxialkabels 5 der Zuführungsleitung 2 verbunden ist. Im Bereich der elektrischen Kreuzung 11 ist eine mechanische und/oder elektrische Schutzeinrichtung angeordnet, die beispielsweise aus einer metallischen Kapsel 12 und einer diese metallische Kapsel 12 umgebenden Isolierung 13 bestehen kann. Die metallische Kapsel 12 wird zweckmäßigerweise mit dem Außenleiter 9 des Koaxialkabels 5 der Zuführungsleitung 2 elektrisch verbunden.

Obwohl das Koaxialkabel 5 der Zuführungsleitung 2 und das Koaxialkabel 6 der Meßelektrode 3 unterschiedliche Koaxialkabel sein können, bietet es sich an, das gleiche Koaxialkabel sowohl für die Zuführungsleitung 2 als auch für die Meßelektrode 3 zu verwenden. Hierfür ist lediglich am Übergang von Zuführungsleitung 2 zur Meßelektrode 3 dieses Koaxialkabel durchzutrennen und der eine Außenleiter mit dem jeweils anderen Innenleiter an der Trennstelle gegenseitig anzuschließen.

Vorzugsweise ist das Koaxialkabel 6 der Meßelektrode 3 so gestaltet, daß dessen Außenleiter 9' eine im Vergleich zur Dicke der äußeren Isolierschicht 10' größere Dicke aufweist. Hierdurch wird erreicht, daß das bei der kapazitiven Füllstandsmessung zwischen der Meßelektrode 3 und der durch das Füllstand gebildeten Gegenelektrode liegende Dielektrikum verhältnismäßig dünn ist.

Die Ausführungsform mit der elektrischen Kreuzung 11 nutzt die Tatsache aus, daß bei Koaxialkabeln im allgemeinen das Verhältnis der Durchmesser von äußerer Isolierschicht 10' zum Durchmesser des Außenleiters 9' kleiner als das Verhältnis der Durchmesser von innerer Isolierschicht 8' zu Innenleiters 7' ist.

Um den nicht vom Füllgut bedeckten Teil der Meßelektrode weitgehend vernachlässigen zu können, wird vorzugsweise die im Zusammenhang mit Figur 1 erläuterte Kapazität der inneren Isolierschicht sehr viel größer als die Kapazität des Kondensators C3 gewählt. Dazu ist das Verhältnis $\ln(d_2/d_1)$ in Figur 1 möglichst klein zu machen. Dies bedeutet, daß die Dicke der Isolierschicht $d_2$ im Vergleich zum Durchmesser $d_1$ des Innenleiters möglichst dünn gewählt wird. Der Innenleiter soll dabei möglichst dick sein. Die Realisierung gemäß Figur 4 erfüllt diese Bedingung in einfacher Weise durch die elektrische Kreuzung, da die Meßelektrode durch das Vorsehen der elektrischen Kreuzung eine im Vergleich zur äußeren Isolierschicht großen Durchmesser aufweist.

Besonders deutlich wird dieser Vorteil anhand eines konkreten Beispieles, das die Verbesserung des Meßeffektes zeigt. Ein handelsübliches Koaxialkabel besitzt beispielsweise einen Innenleiter 7 mit einem Durchmesser $d_1 = 0,9$ mm, eine innere Isolierschicht 8 mit einem Durchmesser $d_2 = 3$ mm, einen Außenleiter 9 mit einem Durchmesser $d_3 = 5$ mm und eine den Außenleiter 9 umgebende äußere Isolierschicht 10 mit einer Dicke von $d_4 = 1$ mm. Entfernt man bei diesem Koaxialkabel zur kapazitiven Füllstandsmessung erfindungsgemäß die äußere Abschirmung und damit den Außenleiter komplett, so könnte man mit dem Innenleiter 7 und mit der diesen umgebenden Isolierschicht 8 und dem an die Isolierschicht 8 liegendem Füllgut als Gegenelektrode eine Kapazität messen, bei der $\ln(d_2/d_1) = 1,2$ ist. Durch das Vorsehen der elektrischen Kreuzung wird jedoch erreicht, daß der Außenleiter 9 und die diesen Außenleiter umgebende äußere Isolierschicht 10 maßgebend sind. Geht man von den obigen Abmessungen des Koaxialkabels aus, so ergibt sich für $\ln(d_4/d_3) = 0,2$. Aus diesen Werten ergibt sich eine Steigerung des Meßeffektes der im Zusammenhang mit Figur 1 erläuterten Formel um den Faktor 5,4. Dies bedeutet gleichzeitig eine Reduktion der Auswirkungen des in Figur 1 gezeigten Kondensators C3 auf das Meßergebnis um 82 %.

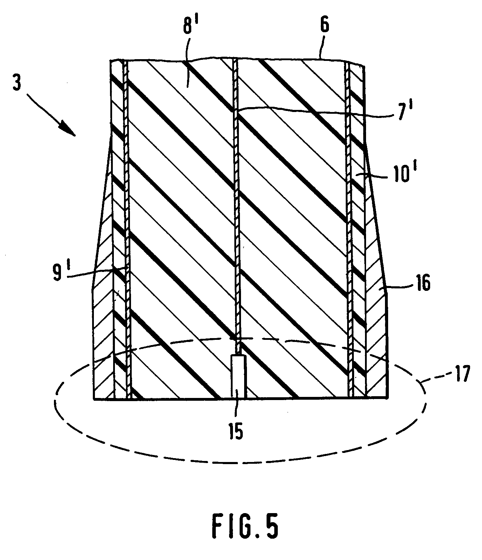

In Figur 5 ist ein Ausschnitt eines distalen Endes der Meßelektrode 3 in Schnittdarstellung gezeigt. Gleiche Bezugszeichen bezeichnen wieder die bereits bekannten Teile. Das distale Ende des Koaxialkabels 6 der Meßelektrode 3 ist erfindungsgemäß als konduktiver Meßaufnehmer 17 ausgebildet. Hierfür ist das distale Ende des Koaxialkabels 6 so ausgestaltet, daß der Innenleiter 7' mit dem zu messenden Füllgut elektrisch in Kontakt treten kann. Im einfachsten Fall ist am unteren Ende des Koaxialkabels 6 eine Öffnung vorgesehen, in der der Innenleiter 7' vom Füllgut kontaktiert werden kann. Zweckmäßigerweise wird das distale Ende des Koaxialkabels 6 von einer Hülse 16 umgeben, bei der der Außenleiter 9' des Koaxialkabels 6 vom Füllgut, beispielsweise vom Grundwasser, isoliert ist und im Bereich des Innenleiters eine Öffnung vorgesehen ist. Wie in Figur 5 dargestellt, kann auch ein Widerstand 15 am Ende des Innenleiters 7' vorgesehen werden, über den das Füllgut den Innenleiter 7' kontaktiert. Ein derartiger Widerstand 15 verhindert eine zu große Belastung des Verstärkers der Meßeinrichtung für die Schirmung bei der Kapazitätsmessung.

Durch das Vorsehen eines konduktiven Meßaufnehmers, wie z.B. eines konduktiven Grenzstandssensors, kann bei der Kalibrierung bzw. Festlegung eines "Nullpegels" festgestellt werden, wann die Meßelektrode in das Füllgut eintaucht. Durch die Verwendung einer Zählvorrichtung an der oben erwähnten Aufwickelvorrichtung oder durch das Vorsehen einer Längenskala auf dem Koaxialkabel, kann dann zusätzlich bei Bedarf die Länge des abgelassenen Koaxialkabels bestimmt werden.

Abschließend ist noch anzumerken, daß die erfindungsgemäße Anordnung nicht auf flexible Koaxialkabel beschränkt ist. So kann die Meßelektrode für den Fall kurzer Meßelektrodenlängen (beispielsweise bis 4 m) auch starr in Form von koaxial zueinander angeordneten starren Leitern realisiert sein, sofern die elektrischen Leiter- wie oben ausgeführt - angeordnet sind.

**Bezugszeichenliste**

| | | |
|---|---|---|
| 1 | = | Meßeinrichtung |
| 2 | = | Zuführungsleitung |
| 3 | = | Meßelektrode |
| 4 | = | Füllgut |
| 5,6 | = | Koaxialkabel |
| 7,7' | = | Innenleiter |
| 8,8' | = | erste Isolierschicht |
| 9,9' | = | Außenleiter |
| 10,10' | = | zweite Isolierschicht |
| 11 | = | elektrische Kreuzung |
| 12 | = | Schutzeinrichtung |
| 13 | = | Isolierung |
| 15 | = | Widerstand |
| 16 | = | Hülse |
| 17 | = | konduktiver Meßaufnehmer |
| 20 | = | Wickelvorrichtung |
| 21 | = | Bodenoberfläche |
| 22 | = | Bohrloch |
| C | = | Meßkapazität |
| C1,C2,C3 | = | Teilkapazitäten |
| B | = | Behälter |
| d1 | = = | Durchmesser des Innenleiters |
| d2 | = | Durchmesser der ersten Isolierschicht |
| D | = | Durchmesser des Behälters |
| E1,E2 | = | Elektroden des Meßkondensators |
| I | = | Füllstand des Füllgutes |
| L | = | maximaler Füllstand des Füllgutes |

**Patentansprüche**

1. Anordnung zur kapazitiven Füllstandsmessung von elektrisch leitenden Füllgütern mit einer von einer Meßeinrichtung (1) über eine Zuführungsleitung (2) angeschlossenen Meßelektrode (3), wobei die Meßeinrichtung (1) eine zu messende Kapazität zwischen der Meßelektrode (3) und einer durch das Füllgut (4) gebildeten Gegenelektrode als Maß für den zu ermittelnden Füllstand bestimmt, **dadurch gekennzeichnet**, daß die Zuführungsleitung (2) und die Meßelektrode (3) jeweils aus einem Koaxialkabel (5, 6) gebildet sind, wobei das Koaxialkabel (6) im Bereich der Meßelektrode (3) einen elektrisch leitenden Innenleiter (7') und Außenleiter (9') aufweist.

2. Anordnung nach Anspruch 1, **dadurch gekennzeichnet**, daß das die Zuführungsleitung (2) bildende Koaxialkabel (5) einen Innenleiter (7), eine diesen Innenleiter (7) umgebende innere Isolierschicht (8), einen die innere Isolierschicht (8) umgebenden Außenleiter (9) und eine den Außenleiter (9) umgebende äußere Isolierschicht (10) aufweist, während daß die Meßelektrode (3) bildende Koaxialkabel (6) einen Innenleiter (7') und eine diesen Innenleiter (7') umgebende innere Isolierschicht (8') sowie einen die innere Isolierschicht (8') umgebenden Außenleiter (9') aufweist.

3. Anordnung nach einem der Ansprüche 1 oder 2, **dadurch gekennzeichnet**, daß mindestens im Bereich der Meßelektrode (3) die innere Isolierschicht (8') des Koaxialkabels (6) einen im Vergleich zum Durchmesser des Innenleiters (7') kleinen Durchmesser aufweist.

4. Anordnung nach Anspruch 1, **dadurch gekennzeichnet**, daß das Koaxialkabel (5) der Zuführungsleitung (2) über eine elektrische Kreuzung (11) mit dem Koaxialkabel (6) der Meßelektrode (3) verbunden ist, indem ein Innenleiter (7) des Koaxialkabels (5) der Zuführungsleitung (2) mit einem Außenleiter (9) des Koaxialkabels (6) der Meßeelektrode (3) und ein Innenleiter (7') des Koaxialkabels (6) der Meßelektrode (3) mit einem Außenleiter (9) des Koaxialkabels (5) der Zuführungsleitung (2) verbunden ist.

5. Anordnung nach Anspruch 4, **dadurch gekennzeichnet**, daß die elektrische Kreuzung (11) innerhalb einer mechanischen und/oder elektrischen Schutzeinrichtung (12) angeordnet ist.

6. Anordnung nach einem der Ansprüche 4 oder 5, **dadurch gekennzeichnet**, daß mindestens im Bereich der Meßelektrode (3) der Außenleiter (9') des Koaxialkabels (6) einen im Vergleich zum Durchmesser der äußeren Isolierschicht (10') größeren Durchmesser aufweist.

7. Anordnung nach einem der Ansprüche 4 bis 6, **dadurch gekennzeichnet**, daß ein distales Ende des Koaxialkabels (6) im Bereich der Meßelektrode (3) als konduktiver Meßaufnehmer (17) ausgebildet ist.

8. Anordnung nach Anspruch 7, **dadurch gekennzeichnet**, daß durch die Meßeinrichtung zur Bestimmung eines Grenzstandes ein Strom auf dem Außenleiter (9) der Zuführungsleitung (2) meßbar ist.

9. Anordnung nach einem der Ansprüche 1 bis 8, **dadurch gekennzeichnet**, daß eine Wickelvorrichtung (14) zum Aufwickeln des Koaxialkabels (5, 6) vorgesehen ist.

10. Anordnung nach einem der Ansprüche 1 bis 9, **dadurch gekennzeichnet**, daß zur Messung der Kapazität gegen Erde durch die Meßeinrichtung (1) ein Testsignal (T) gegen Masse auf den Innenleiter (7) des die Zuführungsleitung (2) bildenden Koaxialkabels (5) anlegbar ist.

11. Anordnung nach einem der Ansprüche 1 bis 10, **dadurch gekennzeichnet**, daß die Meßeinrichtung (1) zum Anlegen eines zum Teststignal (T) identischen, jedoch elektrisch unabhängigen, Signales (S) auf den Außenleiter (9) des Zuführungsleitung (2) vorgesehen ist.

12. Anordnung nach einem der Ansprüche 1 bis 11, **dadurch gekennzeichnet**, daß durch die Meßeinrichtung (1) der Außenleiter (7) des Koaxialkabels (4) auf ein konstantes Gleichspannungspotential legbar ist.

13. Anordnung nach einem der Anprüche 1 bis 12, **dadurch gekennzeichnet**, daß ein Umladekondensator vorgesehen ist, auf den eine Ladung zwischen der Meßelektrode (3) und der Gegenelektrode umladbar ist.

14. Verfahren zur kapazitiven Pegelstandmessung von Grundwasser mit einer Anordnung nach einem der Ansprüche 1 bis 14 , bei welchem die Kapazität des Koaxialkabels (6) der Meßelektrode (3) gegenüber Erde gemessen und als Gegenelektrode die auf Erde liegenden Oberfläche des Grundwassers eingesetzt wird.

FIG.1

FIG. 2

FIG.3

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | FR-A-2 669 422 (A.J. O'NEILL)<br>* Seite 1, Absatz 1 *<br>* Seite 2, Zeile 7 - Seite 3, Zeile 16; Abbildungen 2-1 * | 1-3,14 | G01F23/26 |
| Y | | 9,10 | |
| | --- | | |
| Y | WO-A-90 08304 (EUROPA INTERNATIONAL MANUFACTURING PTY)<br>* Seite 23, Zeile 20 - Seite 24, Zeile 15; Abbildung 7 * | 9 | |
| | --- | | |
| Y | FR-A-2 605 731 (RENAULT)<br>* Seite 3, Zeile 3 - Seite 5, Zeile 11; Abbildungen 1,2 * | 10 | |
| | --- | | |
| A | FR-A-2 288 300 (PFAUDLER-WERKE)<br>* Seite 3, Zeile 6 - Zeile 16; Abbildung 3 * | 4 | |
| | --- | | |
| P,X | EP-A-0 555 710 (BOEHRINGER)<br>* Spalte 6, Zeile 4 - Spalte 7, Zeile 11; Abbildungen 2,3 * | 1,12 | |
| | ----- | | RECHERCHIERTE SACHGEBIETE (Int.Cl.5)<br><br>G01F |

Der vorliegende Recherchenbericht wurde für alle Patentansprüche erstellt

| Recherchenort | Abschlußdatum der Recherche | Prüfer |
|---|---|---|
| DEN HAAG | 1. Juli 1994 | Heinsius, R |

EPO FORM 1503 03.82 (P04C03)